# EUROPEAN PATENT SPECIFICATION

(11) **EP 2 594 125 B1**
(45) Date of publication and mention of the grant of the patent: **21.01.2015**
(21) Application number: 12007532.0
(22) Date of filing: 06.11.2012
(51) Int. Cl.: A01D 34/90, A45F 3/14

(54) **Harness**
Tragegeschirr
Harnais

(30) Priority: 11.11.2011 JP 2011247808
(43) Date of publication of application: 22.05.2013
(73) Proprietor: Makita Corporation, Anjo-shi, Aichi 446-8502 (JP)
(72) Inventor: Ito, Masahiro, Numazu-shi, Shizuoka 410-8535 (JP); Hachisuka, Tomohiro, Anjo-shi, Aichi 446-8502 (JP)
(74) Representative: Müller-Boré & Partner Patentanwälte PartG mbB

(56) References cited:
- JP-A- 2005 143 453
- US-A- 4 298 149

## Description

### BACKGROUND OF THE INVENTION

### TECHNICAL FIELD

The present invention relates to harnesses the operator wears in order to support a power tool such as a brush cutter or a blower.

### BACKGROUND ART

When working with a power tool such as a brush cutter or a blower, the operator wears work equipment called "harness" in view of workability, and for example, the operator engages the power tool with the harness by hanging the power tool therefrom, so that he/she can support the weight of the power tool with his/her body. As described in Japanese Patent Application Publication No. H10-98930 (JP H10-98930 A), a known harness includes a back plate that is placed on the back of the operator, shoulder belts and a side belt which are fixed to the back plate, and a pelvis belt that is placed below the side belt and is fixed to the side belt via an adjusting band. In this harness, with the shoulder belts being placed on the shoulders of the operator, and the side belt being in contact with his/her body on the left side of the operator, the pelvis belt is brought into close contact with the waist of the operator by using the band.

As described in Japanese Patent Application Publication No. 2005-143453 (JP 2005-143453 A), another known harness includes a back plate, a waist belt fixed to the back plate, shoulder belts each having its one end fixed to the back plate and the other end engaged with a band that is attached to the waist belt, first and second side belts that have their one ends respectively fixed to the right and left sides of the back plate, and that are brought into contact with the left and right sides of the operator's body, and a support belt that has its one end fixed to the back plate and has its intermediate part to which the other end of the second side belt is fixed, and that supports a support member engaging a brush cutter etc. In such harness, with the shoulder belts being placed on the shoulders of the operator, and the side belts being in contact with lateral muscles of the operator, a male member of a buckle attached to the other end of the first side belt is engaged with a female member attached to the other end of the support belt, on the front side of the operator.

However, in the harness described in Japanese Patent Application Publication No. H10-98930 (JP H10-98930 A), a large part of the weight of the power tool is carried by the side belt located on the left side of the operator and the pelvis belt. Thus, the load is intensively applied to the left side of the operator's body and the waist of the operator, which may increase a burden on the operator. Since the harness described in Japanese Patent Application Publication No. 2005-143453 (JP 2005-143453 A) uses the first and second side belts, the weight of the power tool can be prevented from being intensively imposed on one side of the operator's body. However, the shoulder belts are merely connected to the waist belt by the bands. Thus, the structure of the harness described in Japanese Patent Application Publication No. 2005-143453 (JP 2005-143453 A) cannot actually distribute the weight of the power tool to the shoulder belts and the waist belt, and thus cannot sufficiently reduce the burden on the operator.

US 4 298 149 A discloses a two-part harness for a motion picture or television cameraman having an upper part for engagement of the cameraman's shoulders and upper back, and a lower part engaging the cameraman's hips. The harness is used to support the weight of the camera and associated apparatus positioned in front of the cameraman, but the harness functions to place most of the vertical load on the hips and most of the horizontal load on the shoulders and upper back. The two parts of the harness are connected for vertical adjustment by the cameraman while wearing the harness.

### SUMMARY OF THE INVENTION

The present invention was proposed in view of the above problems, and it is an object of the present invention to provide a harness capable of reducing a burden on the operator.

According to a first aspect of the present invention, a harness that is worn by an operator to support a power tool includes a pair of shoulder strap pads that are detachably held on both shoulders of the operator, a waist pad that is detachably held on a waist of the operator, wherein the waist pad extends in a lateral direction and wherein each of the pair of shoulder strap pads is connected to a right side and a left side of the waist pad, respectively, and the shoulder strap pads connected to the waist pad can be attached to or detached from each other at one position on a front side of the operator by an attaching and detaching member.

According to a second aspect of the present invention, in the first aspect, in a vertical direction of the harness, the waist pad is located below a position where the shoulder strap pads are coupled to the waist pad via the attaching and detaching member.

According to a third aspect of the present invention, in the second aspect, a horizontal portion is provided in a lowermost part of the waist pad.

According to a fourth aspect of the present invention, in the second aspect, a lowermost part of the waist pad is provided in a central part of the waist pad in the lateral direction.

According to a fifth aspect of the present invention, in the first aspect, the harness further includes a side pad that contacts a side or flank of the operator when the operator wears the harness.

According to a sixth aspect of the present invention, in the fifth aspect, the harness further includes a fastening belt that allows the side pad to be fastened on the side or flank of the operator, wherein the fastening belt is inserted through and held in the attaching and detaching member, and is attached to at least one of the shoulder strap pads such that the fastening belt is adjustable in length.

According to the first aspect of the present invention, the weight of the power tool is distributed to the pair of shoulder strap pads and the waist pad which are coupled together via the attaching and detaching member, whereby the burden on the operator can be reduced.

Since the attaching and detaching member is used, the pair of shoulder strap pads can be attached to and detached from the waist pad at one position on the front side of the operator. This facilitates the operation of attaching and detaching the pair of shoulder strap pads to and from the waist pad. Thus, the operator can easily wear and take off the harness.

According to the second aspect of the present invention, when the shoulder strap pads are attached to the waist pad by the attaching and detaching member, the waist pad can be kept in an attitude tilted obliquely upward toward the front side of the operator, while being in close contact with the waist of the operator. Thus, the waist pad is less likely to slide down the operator's waist.

According to the third aspect of the present invention, the horizontal portion makes it easier for the lowermost part of the waist pad to closely contact the operator's waist when the operator wears the harness.

In addition, the waist pad can be placed in a stable attitude on the ground with the horizontal portion of the waist pad being in contact with the ground. When the waist pad is placed on the ground, dirt etc. adheres only to the horizontal portion, and does not adhere to the entire lower surface of the waist pad. Thus, the lower surface of the waist pad can be prevented from entirely getting dirty.

According to the fourth aspect of the present invention, the state in which the central part of the waist pad in the lateral direction, corresponding to the lowermost part of the waist pad, can easily closely contact the operator's waist can be created when the operator wears the harness.

According to the fifth aspect of the present invention, the weight of the power tool is also distributed to the side pad, whereby the burden on the operator can further be reduced.

According to the sixth aspect of the present invention, an operation of fastening the shoulder strap pads in a direction toward the shoulders of the operator and an operation of fastening the side pad on the side or flank of the operator can be simultaneously performed by adjusting the length of the fastening belt.

### BRIEF DESCRIPTION OF THE DRAWINGS

FIG. 1 is a developed view of a harness according to an embodiment of the present invention.
FIG. 2 is a back view of the harness worn by the operator.
FIG. 3 is a side view of the harness.
FIG. 4 is a front view of the harness.
FIG. 5 is a cross-sectional view of a shoulder strap pad included in the harness.
FIG. 6 is a plan view of a waist pad included in the harness.
FIG. 7 is a cross-sectional view showing a main part taken along line A-A in FIG. 6.

### DETAILED DESCRIPTION OF THE EMBODIMENTS

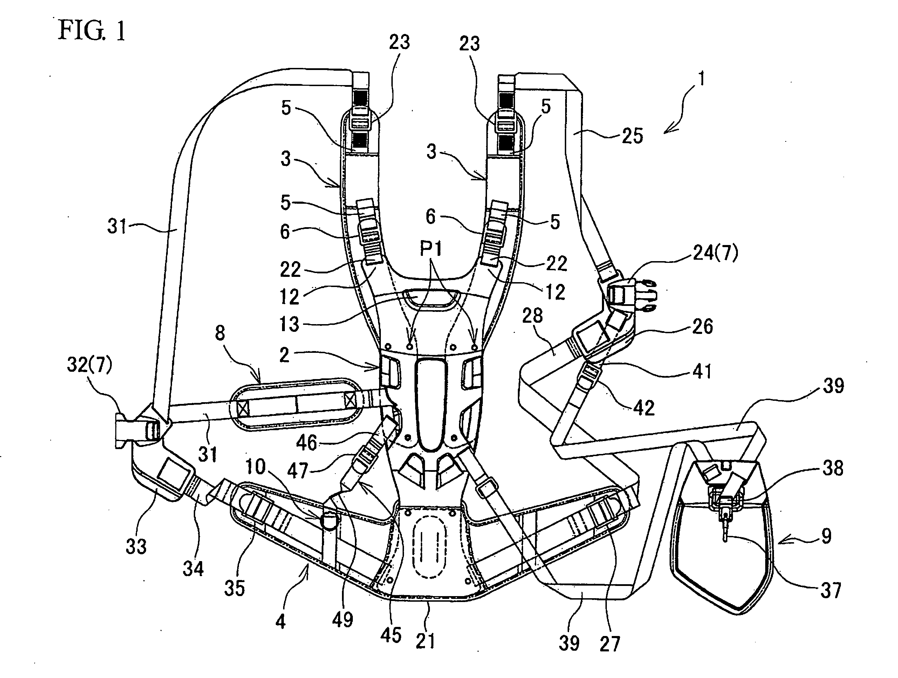

An embodiment of the present invention will be described with reference to FIGS. 1 to 7. A harness 1 shown in FIG. 1 is equipment the operator wears in order to support a power tool such as brush cutter, and includes a back plate 2, shoulder strap pads 3, 3, a waist pad 4, shoulder strap belts 5, 5, first belt length adjusters 6, 6, a buckle 7, a side pad 8, a support member 9, and a hanging ring 10.

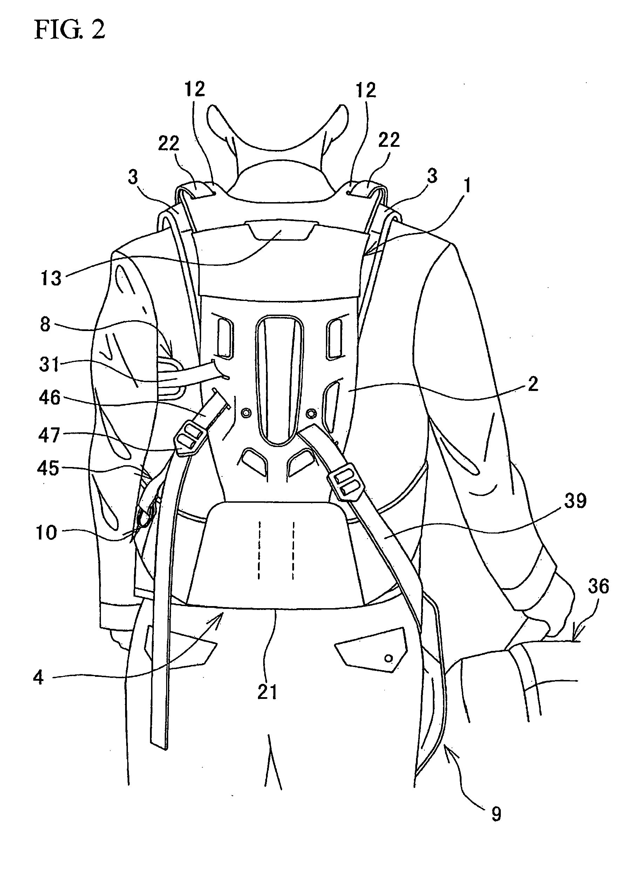

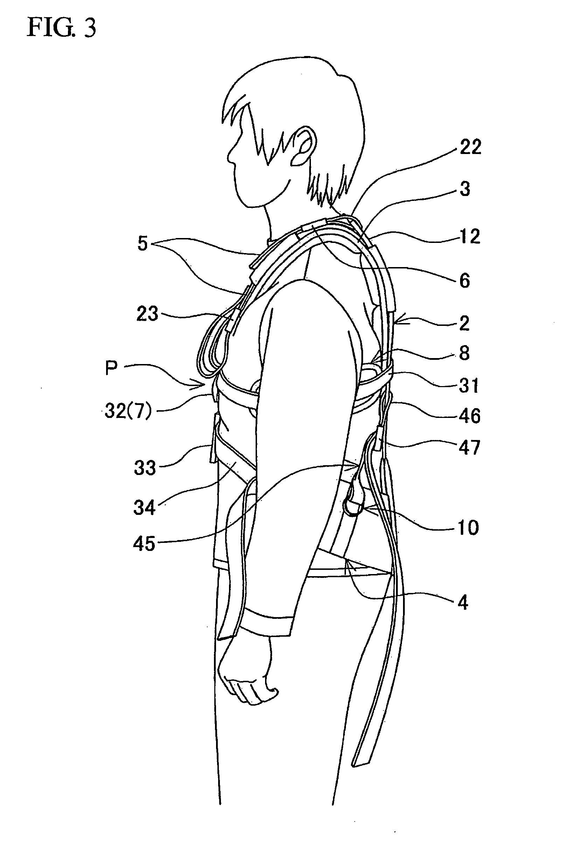

As shown in FIGS. 2 and 3, when the operator wears the harness 1, the back plate 2 is placed on the back of the operator. The back plate 2 is a flexible plate-like member extending in the vertical direction and made of a synthetic resin. The back plate 2 has a pair of narrow portions 12 (see FIGS. 1 and 2) protruding upward from the left and right upper ends of the back plate 2 and having a smaller lateral dimension than a lower part of the back plate 2. As shown in FIGS. 1 and 2, a hole 13 that allows the operator to carry the back plate 2 in his/her hand is formed in an upper part of the back plate 2. The size of the hole 13 is large enough for the operator to insert his/her finger or fingers therein. In the vertical direction of the harness 1 (the vertical direction in FIG. 1), the hole 13 is located above a position P1 (see FIG. 1) where the shoulder strap pads 3, 3 are fixed to the harness 1. The operator can carry the harness 1 with the hand by holding the back plate 2 with the finger or fmgers inserted in the hole 13.

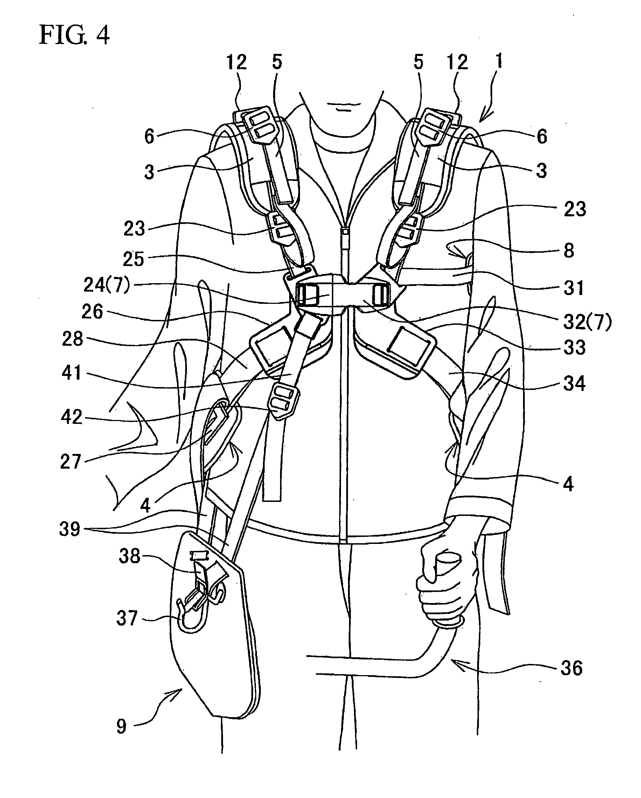

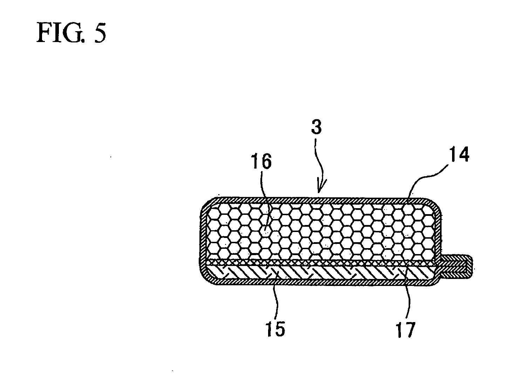

As shown in FIGS. 2 to 4, when the operator wears the harness 1, the shoulder strap pads 3, 3 contact the shoulders of the operator. Upper parts of the shoulder strap pads 3, 3 are fixed at different positions to the inner surface of the back plate 2. As a result, as shown in FIGS. 1 and 4, the shoulder strap pads 3, 3 are fixed to the back plate 2. As shown in FIGS. 1 and 5, each shoulder strap pad 3 is formed in a belt shape, and contains both polyethylene foam 15 and polyurethane foam 16 as cushioning members inside a synthetic fabric cloth 14. In addition, in the present embodiment, a strip of deodorizing sheet 17 containing a deodorant such as activated carbon is interposed between the polyethylene foam 15 and the polyurethane foam 16. The deodorizing sheet 17 provides the shoulder strap pads 3, 3 with a deodorizing function. The deodorizing sheet 17 is an example of a deodorizing sheet of the present invention.

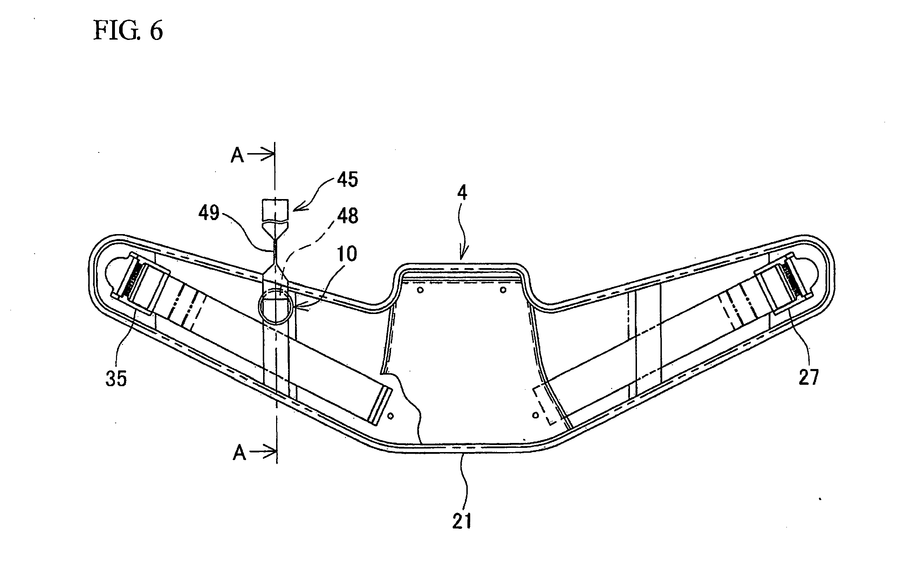

As shown in FIGS. 2 and 3, when the operator wears the harness 1, the waist pad 4 contacts the waist of the operator. The waist pad 4 is fixed to the outer surface of the lower part of the back plate 2. The waist pad 4 is formed in a belt shape extending in the lateral direction, and like the shoulder strap pads 3, 3, contains both polyethylene foam and polyurethane foam inside a synthetic fabric cloth. As shown in FIGS. 1 and 6, the waist pad 4 has a horizontal portion 21 on the lower surface of its central part in the lateral direction, and is shaped so as to be tilted obliquely upward to the left and right from the horizontal portion 21 as a lowermost part. The lateral direction in FIGS. 1 and 6 corresponds to the lateral direction of the waist pad 4.

As shown in FIGS. 3 and 4, when the operator wears the harness 1, the pair of shoulder strap belts 5, 5 respectively located on the shoulder strap pads 3, 3 are placed over the shoulders of the operator. A lower part of each shoulder strap belt 5 is sewn on the shoulder strap pad 3. An upper part of each shoulder strap belt 5 is movably engaged with the first belt length adjuster 6 that serves as an adjusting member, and the length of each shoulder strap belt 5 can be adjusted by the first belt length adjuster 6. As shown in FIGS. 2 and 3, the first belt length adjusters 6, 6 are attached to belts 22, 22 connected to the narrow portions 12, 12 of the back plate 2, respectively.

As shown in FIGS. 1 and 4, second belt length adjusters 23, 23 are attached to the lower ends of the shoulder strap belts 5, 5, respectively. A position adjusting belt 25 connected to a male member 24 of the buckle 7 and capable of adjusting the position of the male member 24 is movably engaged with one of the second belt length adjusters 23, 23. A first plate 26 is fixed to the male member 24. The first plate 26 is made of a synthetic resin, and has a slit that allows a belt to be inserted and held therein. As shown in FIGS. 1, 4, and 6, a third belt length adjuster 27 is attached to the waist pad 4. A first plate position adjusting belt 28 can be adjusted in length by the third belt length adjuster 27 while being inserted through and held in the slit of the first plate 26.

As shown in FIGS. 2 to 4, when the operator wears the harness 1, the side pad 8 can be brought into contact with the left side or flank of the operator. In the following description, the left side in FIG. 2 corresponds to the left-hand side of the operator, the right side in FIG. 2 corresponds to the right-hand side of the operator, the left side in FIG. 4 corresponds to the right-hand side of the operator, and the right side in FIG. 4 corresponds to the left-hand side of the operator. As shown in FIG. 1, a part of a fastening belt 31 is sewn on the upper side of the side pad 8, and the fastening belt 31 is inserted through and held in a slit of a female member 32 of the buckle 7. As shown in FIGS. 1 and 2, one side of the fastening belt 31 is fixed to the back plate 2, and the other side thereof is movably engaged with the other second belt length adjuster 23. As the length of the fastening belt 31 can be adjusted by the second belt length adjuster 23, the side pad 8 can be moved in a direction toward the left side or flank of the operator.

A second plate 33 similar to the first plate 26 (see FIG. 1) is fixed to the female member 32 (see FIG. 1). Moreover, a second plate position adjusting belt 34 (see FIGS. 1 and 4) can be adjusted in length by a forth belt length adjuster 35 (see FIG. 1) attached to the waist pad 4, while being inserted through and held in a slit of the second plate 33.

As shown in FIGS. 1, 2, and 4, the support member 9 is a plate-like member made of a synthetic resin and extending in the vertical direction. The support member 9 is used to engage a brush cutter 36 (see FIG. 4) on the right side of the operator. This support member 9 includes an engaging metal fitting 37 that engages with a hook (not shown) of the brush cutter 36, and a stopper 38 that retains the hook engaged with the engaging metal fitting 37. A support member position adjusting belt 39 is inserted through and held in a slit of the support member 9, one side of the support member position adjusting belt 39 is attached to the back plate 2 (see FIG. 2), and the other side thereof is movably engaged with a fifth belt length adjuster 42 (see FIG. 4) attached to a belt 41 connected to the male member 24. The right side of the operator is an example of the other lateral side of the operator of the present invention.

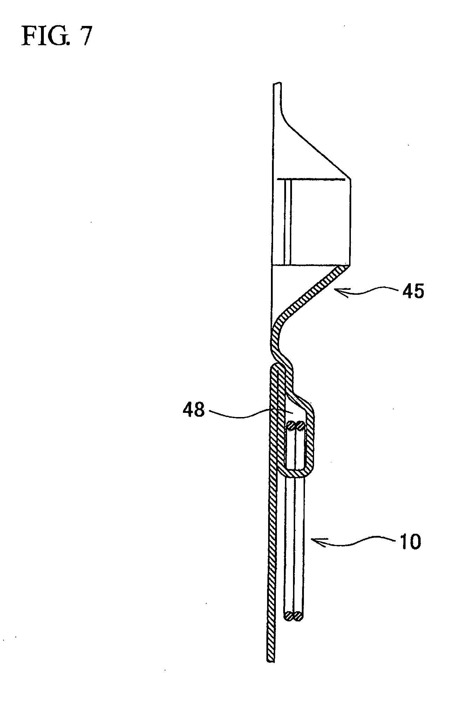

As shown in FIGS. 1 and 2, a support belt 45, which supports the waist pad 4 on the left side of the operator, is attached to the back plate 2. An upper part of the support belt 45 is movably engaged with a sixth belt length adjuster 47 attached to a belt 46 connected to the back plate 2. As shown in FIGS. 6 and 7, a lower part of the support belt 45 is sewn on the left side of the waist pad 4 with respect to a central part in the lateral direction of the waist pad 4, so as to form a loop portion 48 on the waist pad 4. A portion of the support belt 45 in the vertical direction is folded along the centerline thereof in the lateral direction so that both lateral ends face each other, and these lateral ends are sewn together to form a folded portion (a folded portion 49). As shown in FIGS. 1 and 6, the support belt 45 is thus thinned in the folded portion 49, which facilitates movement of the support belt 45.

As shown in FIGS. 6 and 7, the hanging ring 10 made of a metal is attached to the loop portion 48. As shown in FIG. 2, when the operator wears the harness 1, the hanging ring 10 is located on the left side of the operator. The hanging ring 10 is capable of hanging an object thereon. For example, if a karabiner is attached to a holder of a can containing fuel (not shown) and is hung from the hanging ring 10, the operator can easily carry around the can containing fuel. The hanging ring 10 is an example of a hanging portion of the present invention, and the left side of the operator is an example of one lateral side of the operator of the present invention.

An example in which the operator wears the harness 1 to perform a grass cutting operation will be described below. In the following description, the left side in FIG. 1 corresponds to the left side of the harness 1, and the right side in FIG. 1 corresponds to the right side of the harness 1. The operator inserts his/her left arm between the left shoulder strap pad 3 and the side pad 8 and inserts his/her right arm between the right shoulder strap pad 3 and the waist pad 4 in order to bring the shoulder strap pads 3, 3 into contact with his/her both shoulders from behind with the back plate 2 in FIG. 1 being placed on his/her back. Then, while placing the waist pad 4 around his/her waist from behind, the operator inserts the male member 24 of the buckle 7 into the female member 32 thereof on the front side of the operator to couple the male member 24 and the female member 32. Thus, the plates 26, 33 contact the front side of the operator, as shown in FIG. 4. In the state shown in FIG. 4, the shoulder strap pads 3, 3 extend diagonally downward, and can be connected together on the front side of the operator by using the buckle 7 and the belts 25, 31. As shown in the figure, the support member 9 is connected, by the support member position adjusting belt 39, to the buckle 7 that serves as a joint between the shoulder strap pads 3, 3.

Moreover, in the state shown in FIG. 4, the shoulder strap pads 3, 3 can be coupled to the waist pad 4 at one position on the front side of the operator by using the buckle 7, the belts 25, 31, and the plate position adjusting belts 28, 34. As can be seen from FIG. 3, in the vertical direction of the harness 1, the waist pad 4 is located below a position P where the shoulder strap pads 3, 3 are coupled to the waist pad 4. This allows the waist pad 4 to be kept tilted obliquely upward toward the front side of the operator while being in close contact with the waist of the operator as shown in FIGS. 2 and 3. Thus, the waist pad 4 is less likely to slide down the operator's waist even if a force is applied to the support member 9 during the grass cutting operation using the brush cutter 36. As shown in FIG. 2, the horizontal portion 21 of the waist pad 3 makes it easier for the lowermost part of the waist pad 4 to closely contact the waist of the operator. In addition, in the waist pad 4 of the present embodiment, the horizontal portion 21 as the lowermost part is provided in the central part in the lateral direction of the waist pad 4. This makes it easier for the central part of the waist pad 4 to closely contact the waist of the operator. The buckle 7, the belts 25, 31, and the plate position adjusting belts 28, 34 are an example of an attaching and detaching member of the present invention.

In the present embodiment, as shown in FIG. 4, the fastening belt 31 of the side pad 8 is movably engaged with the second belt length adjuster 23 attached to the shoulder strap belt 5 of the left shoulder strap pad 3. Thus, pulling the fastening belt 31 fastens the left shoulder strap pad 3 in a direction toward the left shoulder of the operator, and moves the side pad 8 in a direction in which the side pad 8 fits tightly on the left side or flank of the operator. The left shoulder strap pad 3 is an example of at least one of the pair of shoulder strap pads of the present invention, and the left shoulder of the operator is an example of at least one of the shoulders of the present invention.

The operator pulls the shoulder strap belts 5, 5 out from the first belt length adjusters 6, 6 (see FIGS. 3 and 4) attached to the narrow portions 12, 12 of the back plate 2 via the belts 22, 22, so as to pull the narrow portions 12, 12 toward his/her back. In this manner, the operator can adjust the position of the back plate 2 toward his/her back. In particular, since the narrow portions 12, 12 have a lower second moment of area than the lower part of the back plate 2, the upper part of the back plate 2 where the narrow portions 12, 12 are provided is more easily bent and pulled toward the operator's back than the lower part of the back plate 2. Moreover, since the hole 13 is formed in the back plate 2, the back plate 2 is less rigid in the portion located above the position P1 (see FIG. 1) than in the portion located below the position P1. Accordingly, in the back plate 2, the portion located above the position P1 is more easily bent than the portion located below the position P1. Based on the above, as shown in FIG. 3, the operator can bend the back plate 2 along his/her back so as to closely contact his/her back when wearing the harness 1. The shoulder strap belts 5, 5 and the belts 22, 22 are an example of a belt of the present invention.

After wearing the harness 1 in the manner described above, the operator engages the hook of the brush cutter 36 (see FIG. 4) with the engaging metal fitting 37 (see FIG. 4) of the support member 9. Thus, the weight of the brush cutter 36 is carried by the operator via the harness 1. At this time, since the back plate 2 is in close contact with the operator's back, the weight of the brush cutter 36 can be distributed to the entire back plate 2. Moreover, since the shoulder strap pads 3, 3 are coupled to the waist pad 4 at one position on the front side of the operator, the weight of the brush cutter 36 can be distributed to the shoulder strap pads 3, 3 and the waist pad 4 which are coupled together. Furthermore, since the support member 9 is connected to the buckle 7 that serves as a joint between the pair of shoulder strap pads 3, 3, the weight of the brush cutter 36 can be distributed to both shoulders of the operator which are in contact with the shoulder strap pads 3, 3. The weight of the brush cutter 36 can also be distributed to the side pad 8 contacting the left side or flank of the operator. The burden on the body of the operator can be reduced in this manner.

The operator stably supports the brush cutter 36 with the harness 1 and moves the brush cutter 36 from side to side to cut grass with a cutting blade. If the operator sweats during the grass cutting operation, the sweat is absorbed by the shoulder strap pads 3, 3. The odor of the sweat can be removed by the deodorizing sheet 17 accommodated in the shoulder strap pads 3, 3. Accordingly, even if the harness 1 is shared by a plurality of operators, the operators can comfortably use the harness 1 without being bothered by unpleasant odors resulting from the other operators' sweat.

As shown in FIG. 2, in the glass cutting operation using the harness 1 of the present embodiment, the holder of the can containing fuel, for example, can be hang from the hanging ring 10 via the karabiner on the left side of the operator, with the brush cutter 36 being engaged with the support member 9 on the right side of the operator. Since the waist pad 4 having the hanging ring 10 attached thereto is supported by the back plate 2 via the support belt 45, the waist pad 4 can be prevented from sliding down the waist of the operator due to the weight of the can containing fuel, etc. which is hung from the hanging ring 10. The support belt 45 is thinned at the folded portion 49 (see FIGS. 1 and 6), which facilitates movement of the support belt 45. This can prevent the weight of the can containing fuel, etc. from being intensively imposed on a part of the support belt 45, and thus can prevent the support belt 45 from being torn off from the waist pad 4.

### (Effects of Embodiment)

In the harness 1 of the present embodiment, since the shoulder strap pads 3, 3 have a deodorizing function, unpleasant odors resulting from the operator's sweat absorbed by the shoulder strap pads 3, 3 can be removed. This allows the operator to comfortably use the harness without being bothered by odors.

Since the shoulder strap pads 3, 3, which are the portions located close the operator's nose in the harness 1, has a deodorizing function, emission of unpleasant odors from the shoulder strap pads 3, 3 can be reduced, whereby an optimal deodorizing function can be provided.

Moreover, the harness 1 can be easily provided with a deodorizing function by merely using the deodorizing sheet 17.

Furthermore, since the deodorizing sheet 17 is easy to fold, etc. and is easy to handle, the deodorizing sheet 17 can be easily accommodated in the shoulder strap pads 3, 3.

The harness 1 of the present embodiment is structured so that the back plate 2 is pulled toward the operator's back by adjusting the lengths of the shoulder strap belts 5, 5 by using the first belt length adjusters 6, 6. Thus, the back plate 2 can be brought into close contact with the operator's back by using this simple structure. As a result, the weight of the brush cutter 36 is distributed to the back plate 2, whereby the burden on the operator can be reduced.

Since the support member 9 is connected to the buckle 7 that serves as a joint between the pair of shoulder strap pads 3, 3, the weight of the brush cutter 36 can be distributed to both shoulders of the operator via the shoulder strap pads 3, 3. Thus, the load is not intensively applied to one of the shoulders of the operator, and the burden on the operator's shoulders can be reduced.

Since the narrow portions 12, 12 provided in the upper part of the back plate 2 have a lower second moment of area than the lower part of the back plate 2, the upper part of the back plate 2 is more easily bent than the lower part of the back plate 2. Accordingly, the upper part of the back plate 2 can be easily pulled toward the operator's back by adjusting the lengths of the shoulder strap belts 5, 5 by using the first belt length adjusters 6,6.

Moreover, the back plate 2 is less rigid in the portion located above the position P1 where the shoulder strap pads 3, 3 are fixed to the back plate 2 than in the portion located below the position P1. Accordingly, in the back plate 2, the portion located above the position P1 is more easily bent than the portion located below the position P1. In addition, the operator can carry the harness 1 in his/her hand by holding the back plate 2 with his/her finger or fingers inserted into the hole 13 in the back plate 2. In this manner, the hole 13 can be used to carry the harness 1.

In the harness 1 of the present embodiment, since the shoulder strap pads 3, 3 are coupled to the waist pad 4 at one position on the front side of the operator by using the buckle 7, the belts 25, 31, and the plate position adjusting belts 28, 34, the weight of the brush cutter 36 can be distributed to the shoulder strap pads 3, 3 and the waist pad 4 which are coupled together. As a result, the burden on the operator can be reduced. Moreover, the shoulder strap pads 3, 3 and the waist pad 4 can be attached and detached at one position on the front side of the operator by inserting the male member 24 of the buckle 7 into the female member 32 thereof, and detaching the male member 24 from the female member 32. This facilitates the operation of attaching and detaching the shoulder strap pads 3, 3 and the waist pad 4. Thus, the operator can easily wear and take off the harness 1.

When the shoulder strap pads 3, 3 are coupled to the waist pad 4 via the buckle 7, the belts 25, 31, and the plate position adjusting belts 28, 34, the waist pad 4 can be kept tilted obliquely upward toward the front side of the operator while being in close contact with the operator's waist. Thus, the waist pad 4 is less likely to slide down the operator's waist.

Moreover, since the horizontal portion 21 is provided in the lowermost part of the waist pad 4, this horizontal portion 21 makes it easier for the lowermost part of the waist pad 4 to closely contact the operator's waist when the operator wears the harness 1. In addition, the waist pad 4 can be placed in a stable attitude on the ground with the horizontal portion 21 being in contact with the ground. When the waist pad 4 is placed on the ground, dirt etc. adheres only to the horizontal portion 21, and does not adhere to the entire lower surface of the waist pad 4. Thus, the lower surface of the waist pad 4 can be prevented from entirely getting dirty.

Moreover, since the horizontal portion 21 serving as the lowermost part is provided on the lower surface of the central part in the lateral direction of the waist pad 4, the state in which the central part of the waist pad 4 serving as the lowermost part can easily closely contact the operator's waist can be created when the operator wears the harness 1.

In addition, when the operator wears the harness 1, the weight of the brush cutter 36 is also distributed to the side pad 8, whereby the burden on the operator can further be reduced.

Moreover, the left shoulder strap pad 3 on the operator can be fastened in a direction toward the left shoulder of the operator by pulling the fastening belt 31 to adjust the length of the belt 31. Thus, the operation of fastening the left shoulder strap pad 3 in the direction toward the left shoulder can be performed simultaneously with the operation of fastening the side pad 8 on the left side or flank of the operator. In addition, the weight of the brush cutter 36 can be distributed to the left shoulder strap pad 3 and the side pad 8.

In the harness 1 of the present embodiment, an object such as a can containing fuel can be easily carried by merely hanging the object from the hanging ring 10 of the waist pad 4.

The operator can hang the object from the hanging ring 10 located on the left side of the operator, with the brush cutter 36 being engaged with the support member 9 on the right side of the operator. Thus, the object can be carried without hindering the grass cutting operation using the brush cutter 36.

The waist pad 4 is supported by the back plate 2 via the support belt 45, and the waist pad 4 can be prevented from sliding down the operator's waist due to the weight of the object hung from the hanging ring 10.

Moreover, the support belt 45 is thinned in the folded portion 49, which facilitates movement of the support belt 45. This can prevent the weight of the object from being intensively imposed on a part of the support belt 45, and thus can prevent the support belt 45 from being torn off from the waist pad 4.

The present invention is not limited to the above embodiment, and the configuration can be partially changed as appropriate without departing from the scope of the invention. For example, the deodorizing sheet 17 can be accommodated not only in the shoulder strap pads 3, 3 but also in the waist pad 4 and the side pad 8. Instead of the deodorizing sheet 17, a fragrant sheet, e.g., impregnated with a fragrant component may be accommodated in the shoulder strap pads, so as to perform a deodorizing function by the fragrance emitted from the shoulder strap pads. Instead of the deodorizing sheet or the fragrance sheet, granular deodorant or fragrance can be accommodated in the shoulder strap pads.

Unlike the above embodiment, the horizontal portion may be provided on the lower surface of the waist pad 4 at a position shifted to the left or right from the central part in the lateral direction of the waist pad 4. Unlike the above embodiment, the waist pad 4 may be shaped such that the lower surface of the waist pad 4 is tilted obliquely upward to the left and right from the lower surface of the central part with the lower surface of the central part forming an apex. In the above embodiment, the harness is provided with the side pad that contacts the left side or flank of the operator. However, the harness may be provided with a side pad that contacts the right side or flank of the operator, or may be provided with a plurality of side pads that contact the left and right sides or flanks of the operator. The above embodiment is described with respect to an example in which a part of the fastening belt 31 is sewn on the upper side of the side pad 8. However, a fastening belt may be inserted through and held in the side pad 8, and the side pad 8 may be brought into contact with the left side or flank of the operator as the length of the fastening belt is adjusted. In this case, unlike the example in which a part of the fastening belt 31 is sewn on the upper side of the side pad 8, the fastening belt can be inserted into and removed from the side pad 8 while being engaged therewith. This can reduce a force pulling the fastening belt to adjust the length of the fastening belt.

Unlike the above embodiment, for example, a hook-and-loop fastener, a snap button, etc. may be attached to the waist pad 4 instead of the hanging ring 10, and a hook-and-loop fastener on an object may be pressed against the hook-and-loop fastener on the waist pad 4 so as to be bonded together, or a snap button on the object may be attached to the snap button on the waist pad 4.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A harness (1) which is worn by an operator to support a power tool (36) and includes a pair of shoulder strap pads (3, 3) that are detachably held on both shoulders of the operator and a waist pad (4) that is detachably held on a waist of the operator, wherein the waist pad (4) extends in a lateral direction, the harness (1) being **characterized in that**:
each of the pair of shoulder strap pads (3, 3) is connected to a right side and a left side of the waist pad (4), respectively, and
the shoulder strap pads (3, 3) connected to the waist pad (4) can be attached to or detached from each other at one position on a front side of the operator by an attaching and detaching member.

2. The harness (1) according to claim 1, wherein
in a vertical direction of the harness (1), the waist pad (4) is located below a position where the shoulder strap pads (3, 3) are coupled to the waist pad (4) via the attaching and detaching member.

3. The harness (1) according to claim1 or 2, wherein
a horizontal portion (21) is provided in a lowermost part of the waist pad (4).

4. The harness (1) according to any of claims 1 to 3, wherein
a lowermost part of the waist pad (4) is provided in a central part of the waist pad (4) in the lateral direction.

5. The harness (1) according to any one of claims 1 to 4, further comprising:
a side pad (8) that contacts a side or flank of the operator when the operator wears the harness (1).

6. The harness (1) according to claim 5, further comprising:
a fastening belt (31) that allows the side pad (8) to be fastened on the side or flank of the operator, wherein
the fastening belt (31) is inserted through and held in the attaching and detaching member, and is attached to at least one of the shoulder strap pads (3) such that the fastening belt (31) is adjustable in length.

7. The harness (1) according to claim 6, wherein
the attaching and detaching member is formed by
a position adjusting belt (25) that is connected to a male member (24) of a buckle (7) and is attached to one (3) of the pair of shoulder strap pads (3, 3) such that the position adjusting belt (25) is adjustable in length,
a first plate position adjusting belt (28) that is inserted through and held in a first plate (26) fixed to the male member (24), and that is adjustable in length by a belt length adjuster (27) attached to the waist pad (4),
the fastening belt (31) that is inserted through and held in a female member (32) of the buckle (7), which is to be coupled to the male member (24), that is attached to the other shoulder strap pad (3) such that the fastening belt (31) is adjustable in length, and that allows the side pad (8) to be fastened on the side or flank of the operator on the other shoulder strap pad (3) side, and
a second plate position adjusting belt (34) that is inserted through and held in a second plate (33) fixed to the female member (32), and that is adjustable in length by another belt length adjuster (35) attached to the waist pad (4).

8. The harness (1) according to any one of claims 1 to 7, wherein
the waist pad (4) is fixed to an outer surface of a lower part of a back plate (2).

9. The harness (1) according to any one of claims 3 to 8, wherein
the waist pad (4) is shaped so as to be tilted obliquely upward to left and right from the lowermost part.

10. The harness (1) according to claim 8 or 9, wherein
a support belt (45) that supports the waist pad (4) on one lateral side of the operator is attached to the back plate (2).

11. The harness (1) according to claim 10, wherein
one end of the support belt (45) is sewn on the waist pad (4) on the one lateral side, and the other end of the support belt (45) is movably engaged with a belt length adjuster (47) attached to a belt (46) that is connected to the back plate (2).

12. The harness (1) according to claim 10 or 11, wherein
the support belt (45) is provided, in a region thereof in an extending direction, with a portion (49) that is formed by folding the support belt (45) along a centerline thereof in a lateral direction so that both ends of the support belt (45) in the lateral direction face each other, and sewing the both ends together.

13. The harness (1) according to any of claims 8 to 12, wherein
one end of the fastening belt (31) is fixed to the back plate (2), and the other end of the fastening belt (31) is movably engaged with a belt length adjuster (23) attached to the other shoulder strap pad (3).

## Patentansprüche

1. Tragegeschirr (1), das von einem Bediener getragen wird, um ein strombetriebenes Werkzeug (36) zu halten, und das ein Paar Schulterbandpolster (3, 3), die auf beiden Schultern des Bedieners lösbar gehalten werden, und ein Hüftpolster (4), das lösbar auf einer Hüfte des Bedieners gehalten wird, umfasst, wobei das Hüftpolster (4) sich in einer seitlichen Richtung erstreckt, wobei das Tragegeschirr (1) **dadurch gekennzeichnet ist, dass**:
jedes des Paars Schulterbandpolster (3, 3) jeweils mit einer rechten Seite und einer linken Seite des Hüftpolsters (4) verbunden ist, und
die mit dem Hüftpolster (4) verbundenen Schulterbandpolster (3, 3) an einer Position auf einer Vorderseite des Bedieners durch ein Befestigungs- und Löseelement befestigt oder gelöst werden können.

2. Tragegeschirr (1) nach Anspruch 1, wobei
das Hüftpolster (4) sich in einer Vertikalrichtung des Tragegeschirrs (1) unter einer Position befindet, wo die Schulterbandpolster (3, 3) über das Befestigungs- und Löseelement mit dem Hüftpolster (4) gekoppelt werden.

3. Tragegeschirr (1) nach Anspruch 1 oder 2, wobei
ein horizontaler Abschnitt (21) in einem untersten Teil des Hüftposters (4) bereitgestellt ist.

4. Tragegeschirr (1) nach einem der Ansprüche 1 bis 3, wobei
der unterste Teil des Hüftpolsters (4) in der seitlichen Richtung in einem mittleren Teil des Hüftpolsters (4) bereitgestellt ist.

5. Tragegeschirr (1) nach einem der Ansprüche 1 bis 4, das ferner umfasst:
ein Seitenpolster (8), das eine Seite oder Flanke des Bedieners berührt, wenn der Bediener das Tragegeschirr (1) trägt.

6. Tragegeschirr (1) nach Anspruch 5, das ferner umfasst:
einen Befestigungsgurt (31), der zulässt, dass das Seitenpolster (8) auf der Seite oder Flanke des Bedieners befestigt wird, wobei
der Befestigungsgurt (31) in das Befestigungs- und Löseelement eingesetzt und darin gehalten wird und an wenigstens einem der Schulterbandpolster (3) befestigt wird, so dass der Befestigungsgurt (31) in der Länge einstellbar ist.

7. Tragegeschirr (1) nach Anspruch 6, wobei
das Befestigungs- und Löseelement gebildet ist aus
einem Positionseinstellgurt (25), der mit einem aufzunehmenden Element (24) einer Schnalle (7) verbunden ist und an einem (3) des Paars von Schulterbandpolstern (3, 3) befestigt ist, so dass der Positionseinstellgurt (25) in der Länge einstellbar ist,
einem ersten Plattenpositionseinstellgurt (28), der durch eine an dem aufzunehmenden Glied (24) fixierten ersten Platte (26) eingesetzt und gehalten wird und dessen Länge durch eine an dem Hüftpolster (4) befestigte Gurtlängeneinstelleinrichtung (27) einstellbar ist,
dem Befestigungsgurt (31), der durch ein aufnehmendes Glied (32) der Schnalle (7) eingesetzt und darin gehalten wird, das mit dem aufzunehmenden Glied (24) gekoppelt werden soll, das an dem anderen Schulterbandpolster (3) befestigt ist, so dass der Befestigungsgurt (31) in der Länge einstellbar ist, und das zulässt, dass das Seitenpolster (8) auf der Seite oder Flanke des Bedieners auf der anderen Schulterbandpolsterseite (3) befestigt wird, und
einem zweiten Plattenpositionseinstellgurt (34), der durch eine an dem aufnehmenden Glied (32) fixierten zweiten Platte (33) eingesetzt und gehalten wird und dessen Länge durch eine andere an dem Hüftpolster (4) befestigte Gurtlängeneinstelleinrichtung (35) einstellbar ist.

8. Tragegeschirr (1) nach einem der Ansprüche 1 bis 7, wobei
das Hüftpolster (4) an einer Außenfläche eines unteren Teils einer Rückenplatte (2) fixiert ist.

9. Tragegeschirr (1) nach einem der Ansprüche 3 bis 8, wobei
das Hüftpolster (4) derart geformt ist, dass es von dem untersten Teil von links nach rechts schräg nach oben geneigt ist.

10. Tragegeschirr (1) nach Anspruch 8 oder 9, wobei
ein Haltegurt (45), der das Hüftpolster (4) auf einer seitlichen Seite des Bedieners hält, an der Rückenplatte (2) befestigt ist.

11. Tragegeschirr (1) nach Anspruch 10, wobei
ein Ende des Haltegurts (45) auf einer seitlichen Seite auf das Hüftpolster (4) genäht ist und das andere Ende des Haltegurts (45) mit einer an Gurtlängeneinstelleinrichtung (47) beweglich in Eingriff ist, die an einem Gurt (46) befestigt ist, der mit der Rückenplatte (2) verbunden ist.

12. Tragegeschirr (1) nach Anspruch 10 oder 11, wobei
der Haltegurt (45) in einem Bereich in seiner Ausdehnungsrichtung mit einem Abschnitt (49) versehen ist, der durch Falten des Haltegurts (45) entlang seiner Mittellinie in einer seitlichen Richtung, so dass beide Enden des Haltegurts (45) in der seitlichen Richtung einander gegenüber liegen, und Zusammennähen beider ausgebildet wird.

13. Tragegeschirr (1) nach einem der Ansprüche 8 bis 12, wobei
ein Ende des Befestigungsgurts (31) an der Rückenplatte (2) fixiert ist und das andere Ende des Befestigungsgurts (31) mit einer Gurtlängeneinstelleinrichtung (23), die an dem anderen Schulterbandpolster (3) befestigt ist, beweglich eingreift.

## Revendications

1. Harnais (1) qui est porté par un opérateur pour supporter un outil électrique (36) et inclut une paire de coussins pour bretelles (3, 3) qui sont maintenus de manière amovible sur les deux épaules de l'opérateur et un coussin pour taille (4) qui est maintenu de manière amovible sur une taille de l'opérateur, dans lequel le coussin pour taille (4) s'étend dans une direction latérale, le harnais (1) étant **caractérisé en ce que** :
chacun de la paire de coussins pour bretelles (3, 3) est connecté à un côté droit et un côté gauche du coussin pour taille (4), respectivement, et
les coussins pour bretelles (3, 3) connectés au coussin pour taille (4) peuvent être reliés l'un à l'autre ou détachés l'un de l'autre en une position sur un côté avant de l'opérateur par un élément de liaison et de détachement.

2. Harnais (1) selon la revendication 1, dans lequel
dans une direction verticale du harnais (1), le coussin pour taille (4) est situé en dessous d'une position où les coussins pour bretelles (3, 3) sont raccordés au coussin pour taille (4) par le biais de l'élément de liaison et de détachement.

3. Harnais (1) selon la revendication 1 ou 2, dans lequel
une portion horizontale (21) est prévue dans une partie la plus basse du coussin pour taille (4).

4. Harnais (1) selon l'une quelconque des revendications 1 à 3, dans lequel une partie la plus basse du coussin pour taille (4) est prévue dans une partie centrale du coussin pour taille (4) dans la direction latérale.

5. Harnais (1) selon l'une quelconque des revendications 1 à 4, comprenant en outre :
un coussin latéral (8) qui vient en contact avec un côté ou flanc de l'opérateur lorsque l'opérateur porte le harnais (1).

6. Harnais (1) selon la revendication 5, comprenant en outre :
une ceinture d'attache (31) qui permet au coussin latéral (8) d'être attaché sur le côté ou flanc de l'opérateur, dans lequel
la ceinture d'attache (31) est insérée à travers et maintenue dans l'élément de liaison et de détachement, et est reliée à au moins un des coussins pour bretelles (3) de sorte que la ceinture d'attache (31) est ajustable en longueur.

7. Harnais (1) selon la revendication 6, dans lequel
l'élément de liaison et de détachement est formé de
une ceinture d'ajustement de position (25) qui est connectée à un élément mâle (24) d'une boucle (7) et est reliée à un (3) de la paire de coussins pour bretelles (3, 3) de sorte que la ceinture d'ajustement de position (25) est ajustable en longueur,
une ceinture d'ajustement de position de première plaque (28) qui est insérée à travers et maintenue dans une première plaque (26) fixée à l'élément mâle (24), et qui est ajustable en longueur par un dispositif d'ajustement de longueur de ceinture (27) relié au coussin pour taille (4),
la ceinture d'attache (31) qui est insérée à travers et maintenue dans un élément femelle (32) de la boucle (7), qui doit être raccordé à l'élément mâle (24), qui est reliée à l'autre coussin pour bretelles (3) de sorte que la ceinture d'attache (31) est ajustable en longueur, et qui permet au coussin latéral (8) d'être attaché sur le côté ou flanc de l'opérateur sur le côté de l'autre coussin pour bretelles (3), et une ceinture d'ajustement de position de seconde plaque (34) qui est insérée à travers et maintenue dans une seconde plaque (33) fixée à l'élément femelle (32), et qui est ajustable en longueur par un autre dispositif d'ajustement de longueur de ceinture (35) relié au coussin pour taille (4).

8. Harnais (1) selon l'une quelconque des revendications 1 à 7, dans lequel le coussin pour taille (4) est fixé à une surface externe d'une partie inférieure d'une plaque arrière (2).

9. Harnais (1) selon l'une quelconque des revendications 3 à 8, dans lequel le coussin pour taille (4) est formé de manière à être incliné de façon oblique vers le haut vers la gauche et la droite depuis la partie la plus basse.

10. Harnais (1) selon la revendication 8 ou 9, dans lequel une ceinture de support (45) qui supporte le coussin pour taille (4) sur un côté latéral de l'opérateur est reliée à la plaque arrière (2).

11. Harnais (1) selon la revendication 10, dans lequel une extrémité de la ceinture de support (45) est cousue sur le coussin pour taille (4) sur le côté latéral et l'autre extrémité de la ceinture de support (45) est engagée de manière mobile avec un dispositif d'ajustement de longueur de ceinture (47) relié à une ceinture (46) qui est connectée à la plaque arrière (2).

12. Harnais (1) selon la revendication 10 ou 11, dans lequel la ceinture de support (45) est pourvue, dans une région de celle-ci dans une direction d'extension, d'une portion (49) qui est formée en pliant la ceinture de support (45) le long d'une ligne médiane de celle-ci dans une direction latérale de sorte que les deux extrémités de la ceinture de support (45) dans la direction latérale se font face l'une l'autre, et cousant les deux extrémités ensemble.

13. Harnais (1) selon l'une quelconque des revendications 8 à 12, dans lequel une extrémité de la ceinture d'attache (31) est fixée à la plaque arrière (2) et l'autre extrémité de la ceinture d'attache (31) est engagée de manière mobile avec un dispositif d'ajustement de longueur de ceinture (23) relié à l'autre coussin pour bretelles (3).
